# EUROPEAN PATENT APPLICATION

(11) **EP 1 167 853 A2**
(43) Date of publication of application: **02.01.2002**
(21) Application number: 00830690.4
(22) Date of filing: 23.10.2000
(51) Int. Cl.: F16L 13/16

(54) **Pressure fitting for tubes**

(30) Priority: 27.06.2000 IT BS000058
(71) Applicant: ITAP S.p.A., 25065 Lumezzane S.S. (Brescia) (IT)
(72) Inventor: Patti, Vincenzo, 25065 Lumezzane S.S. (Brescia) (IT); Faita, Ilario, 25065 Lumezzane S.S. (Brescia) (IT)
(74) Representative: Manzoni, Alessandro

(57) **Abstract**

This invention concerns a pressure fitting (pressfitting) for a permanent juncture of tubes and similar, consisting of a tubular body (12) extending along an axis (13) and, near at least one of its ends, having a peripheral bulging (14) which defines a recess (15) for housing a round grommet (16). The peripheral bulging (14), in the initial state, has, in cross-section, the shape of a practically rectangular trapezium, with a first side (18) that extends radially towards the outside of the tubular body (12), a second free sloping side (19) at the free end of the fitting, angled so as to diverge away from the first side in the direction of the tubular body axis, a side or external shorter base (20) that is practically parallel to the body axis and that joins the first and second side at the top, and an absent longer side, which defines the aperture of the recess towards the body axis.

## Description

### Field of the invention

This invention concerns a pressure fitting for tubes, commonly known as "pressfitting".

### State of the art

A pressure fitting of the type in question, which may be straight, an elbow bend, a T-piece or other shape is used to make permanent leak-proof joints for tubes. It usually consists of a tubular body, profiled towards at least one of its ends in order to give a peripheral bulging, which defines a recess which opens towards the internal part of the tubular body and in which a round grommet is housed.

There already exist various models of this type of fitting, usually in steel or copper, where the biggest difference is in the shape of the peripheral bulging, the angle of the slopes of said bulging and an eventual extreme protuberance of the body, beyond the bulging.

A first example of the pressure fitting was presented in US-3 149 861, which describes a tube joint consisting of a thin-walled coupling element, with a round recess at each extremity to receive a joint ring on part of a tube to be connected. On the inside, the recess has the same profile as the joint ring.

In US-3 596 939 there is a description of another example of fitting, where the tubular body had two peripheral recesses, each containing a round grommet and with an extreme cylindrical part that extends beyond each recess. The fitting is fastened to the tubes that are to be joined by squeezing radially the end of the cylindrical parts. The EP 0 343 395 also shows a pressure fitting with a cylindrical part extending beyond the round recess for the round grommet and where the fitting is squeezed, for use, from either side of the peripheral bulging. This document essentially characterises the elasticity values of the fitting compared to the tube that needs connecting and the thickness of the fitting wall which must resist the springback of the tube wall after deformation.

Further examples of fittings with radial squeezing are to be found in the documents listed below:

The EP 0 361 630 refers to a fitting in which the peripheral bulging that defines the recess for a grommet has, when seen in cross-section lengthwise, a hook shape with a front wall that is essentially perpendicular to the fitting axis, an opposite wall that slopes at a specific angle and a convex radial part that connects the two facing walls at the top.

In IT-1 290 534 (corresponding to EP-0 870 964) a pressure fitting is claimed for, in which the peripheral bulging which defines the recess for a grommet, seen lengthwise in cross-section, forms an essentially isosceles triangle with a top angle between 55° and 65°, with 60° being ideal.

US-5 168 618 essentially corresponds to the above-mentioned EP 0 361 630 and emphasises the method of radial squeezing for mounting in position, this being circular, hexagonal or in sectors.

DE-PS 195 09 586 refers to a fitting with a practically semi-toroidal cross-section for accommodating a toroidal grommet.

Other documents that illustrate the state of the art are: DE-U 295 01 800; DE-PS-195 44 161; DE-PS-196 37 688; EP-403 037, etc

### Description of the invention

Following this introduction, the aim of this invention is to make and supply a pressure fitting or pressfitting which, although having the same general characteristics of the more traditional fittings, has a new and original shape and set-up, at least at the level of the one or more peripheral bulges that define a recess for a round grommet, improving the blocking and leak-proof conditions for the tubes that need to be connected, as well as being usable with squeezing devices already available on the market.

This aim is achieved by a pressure fitting or pressfitting, as described in claim 1.

In practice, the one or more bulges that define a recess for the round grommet, before being compressed, have a trapezoidal cross-section, practically rectangular with one oblique side that can be varied in angle, facing the free end of the fitting and which may be truncated or extend as an almost cylindrical end part, having a diameter sufficient to allow the tube to pass through when the latter is coupled to the fitting.

This trapezoidal shape of the bulging and, correspondingly, of the recess for the grommet, is particularly innovative for the use and purpose of the device, both in terms of the fastening of the tube and the fitting when coupled, and for the proper grip of the grommet around the tube. In fact, the tubing is often interred. For this reason, it is clear how important it is to squeeze the joint ring completely, but without damaging it. The shape of the bulging of the fitting in this invention has been specially studied to give a safe method of squeezing the joint ring, whereby the squeezing is both uniform and does not risk damaging the ring itself.

The best material for creating the fitting body is stainless steel, although copper, bronze, iron-carbon and all those metal materials are possible which lend themselves to making the fitting, starting with thin-walled tubes, or by moulding and subsequent turning, or by die-casting, etc. Even pairing is to be considered a valid alternative - with the fitting made from a variety of different materials, for example, the tube in copper and the fitting in stainless steel, just like the coupling of aluminium tubes and fittings.

The material used for the joint ring is made from pliable material, such as rubber, epoxy resin, neoprene or other elastomer.

The fitting may have various forms: straight, "T"-shaped, "L"-shaped, with a threaded attachment, a bend, or may constitute the final part of tap bodies, ball valves, etc.

### Brief description of the drawings

Further details of the invention will become clear from the following description, where reference is made to the enclosed drawings, which are indicative but not binding, where:
Figs 1 and 1a show a partial lengthwise cross-section of one version of the fitting, seen, respectively, before and after its attachment to the tube;
Figs 1b, 1c and 1d show, in cross-section, the progressive deformation of the bulging and the grommet inside it, with the application of the fitting in Fig. 1 to the tube;
Figs 2 and 2a show a partial lengthwise cross-section of the fitting in one version, seen, respectively, before and after its attachment to a tube;
Figs 3 and 3a show the same views of another version of the fitting, before, during and after its attachment to a tube;
Fig. 3b shows an alternative version to that in Fig. 3; and
Figs 4 and 4a show a partial lengthwise cross-section of yet another version of the fitting, seen before and after its attachment to a tube.

### Detailed description of the invention

In said drawings, the pressure fitting is indicated generally with 10, the tube to which it is attached with 11, and the similar or equivalent parts in each version of the fitting are indicated with the same reference numbers.

The fitting 10 consists of a tubular body 12 with a longitudinal axis 13 and having, at least at one end, a peripheral bulging 14. Internally, this bulging defines a round recess 15, open towards the axis 13 of the body 12 and designed to house a round grommet 16.

Along the tubular body 12, at a distance from the bulging 14, there is an internal catch 17, against which the end of the tube 11 blocks when it is inserted into the fitting. In other terms, the catch 17 may be round or divided into sections and it defines the extent to which the tube 11 is inserted into the fitting, ensuring the correct coupling, but without the tube invading the opposite side of the fitting, which could house part of another tube or other element.

The bulging 14 and, correspondingly, the recess 15 which it defines, reveals, in cross-section, the shape of a practically rectangular trapezium, with a radial side 18 that extends outwards from the tubular body 12 almost perpendicularly to the longitudinal axis 13 of the fitting, with a sloping free side 19 at the free end of the fitting, which is angled so as to diverge with respect to the radial side 18 as it goes towards the fitting axis, with a side or external shorter base 20 which is slightly convex, essentially parallel to the axis of the body 12 and joining together at the top the radial side 18 and sloping side 19, and a longer internal side which is missing, in order to define the opening of the recess 15 towards the fitting axis.

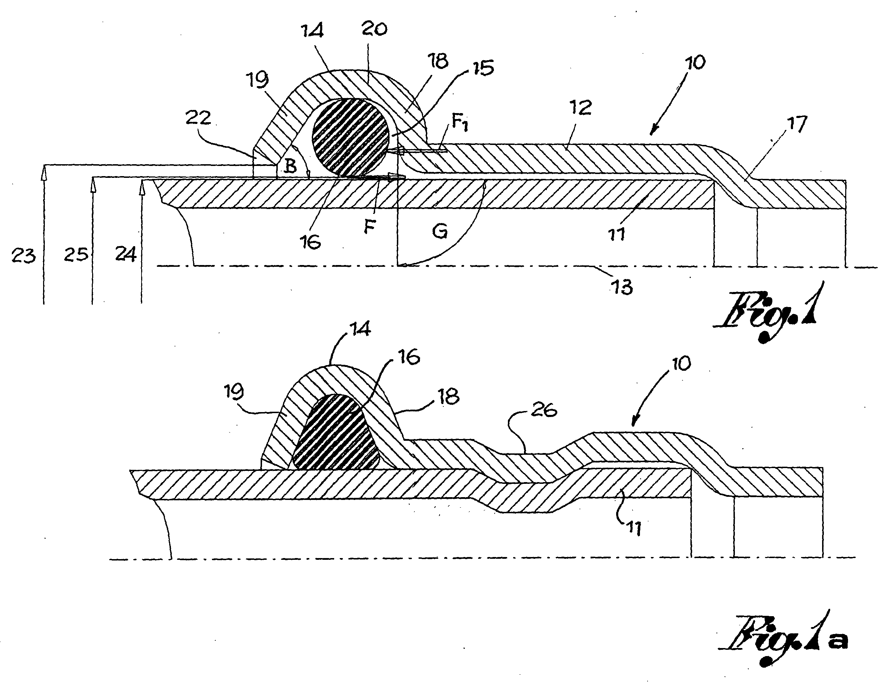

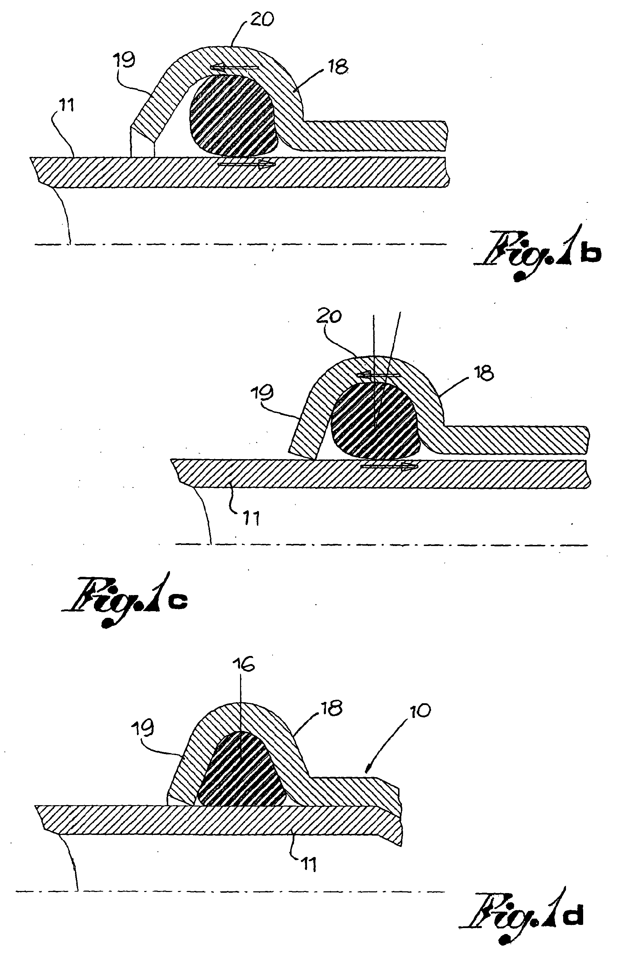

In the version shown in Fig. 1, in the initial state, before attaching the fitting 10 to the tube 11, the radial side 18 of the bulging 14 forms an angle G of 80-90°, preferably 90°, with the axis 13 of the body 12, while the free sloping side 19 is truncated and pointed towards the tube 11, forming an angle B of 50-75°, preferably 55°, with the tube surface and, correspondingly, with the axis of the body 12.

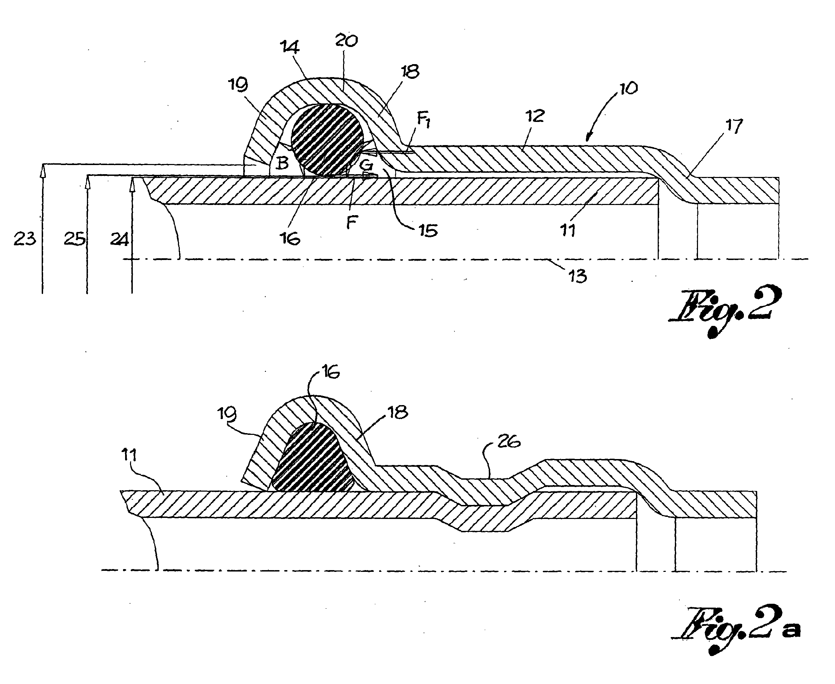

In the version shown in Fig. 2, in the initial state, the radial side 18 and the sloping side 19 both form with the axis of the body an angle of G = B of about 50-75°, preferably 60°, for an extreme case in which the bulging has the shape of an isosceles triangle.

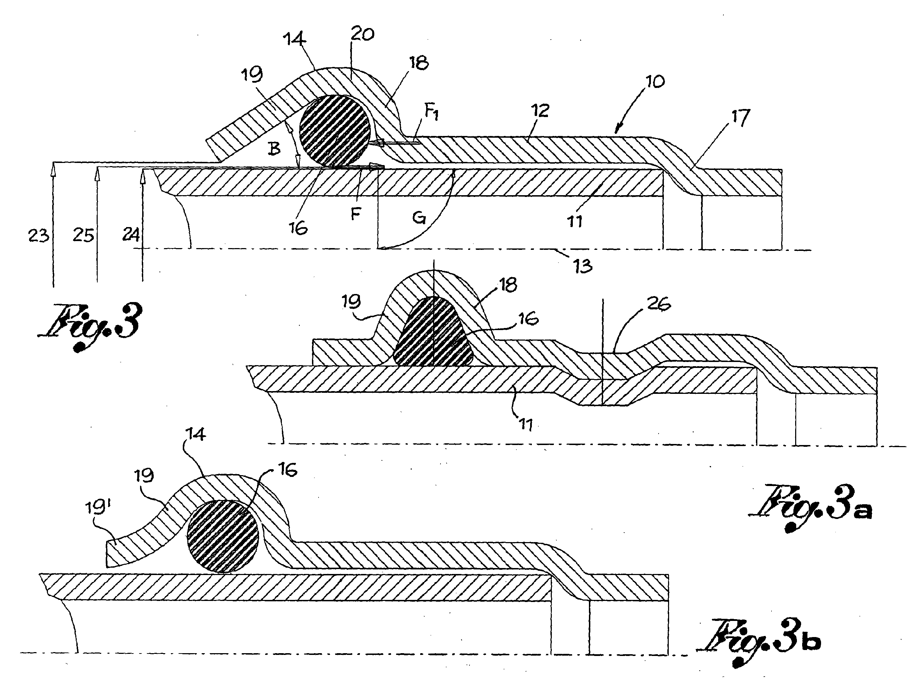

In the example shown in Fig. 3, in the initial state, the radial side 18 of the bulging 14 still has an angle G of 80-90°, preferably 90°, with respect to the axis 13 of the tubular body 12, while the free sloping side 19 extends further in length to form an angle B of 25-35°, preferably 30°, with the surface of the tube 11 and, correspondingly, with the axis 13 of the tubular body.

The version in Fig. 3b is a variation of the fitting in Fig. 3, consisting in the fact that the free sloping side 19 is not straight, but has a final part curving towards the outside 19' which is almost parallel to and touching the tube.

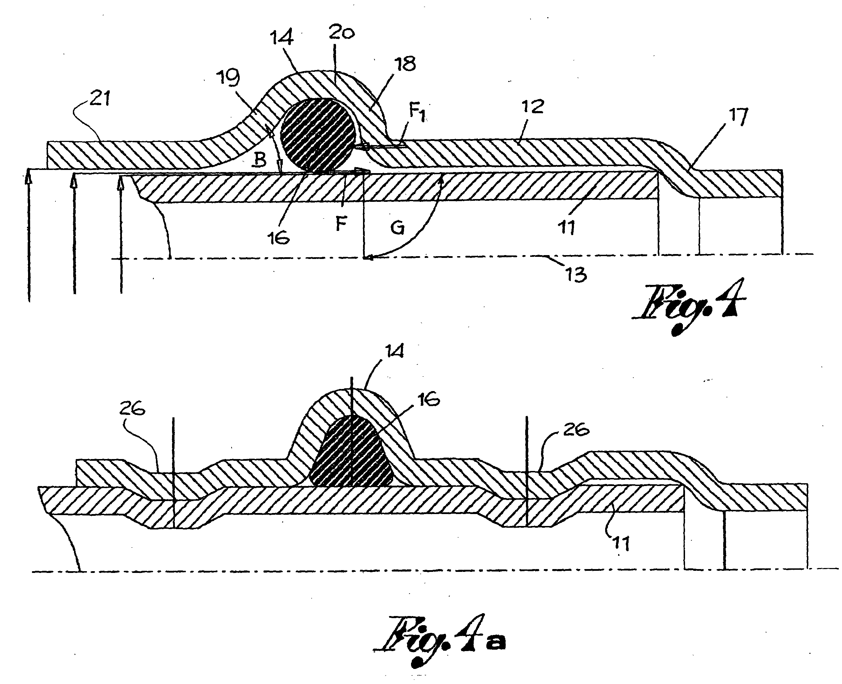

In the version shown in Fig. 4, the sloping side 19 of the bulging 14 extends as a cylindrical portion 21, running parallel to the tube 11 to be connected on the opposite side of the tubular body of the fitting itself.

Anyway, whether the free sloping side 19 is truncated with a final portion curving outwards 19', or with a cylindrical extension 21, it defines an aperture 22 for the insertion of the tube, which has a greater diameter 23 than either the external diameter 24 of the tube or the internal diameter 25 of the grommet 16 located inside the recess 15. Meanwhile, the internal diameter 25 of the grommet may be the same, slightly bigger or slightly smaller than the external diameter of the tube.

Furthermore, it should be noted that the side or shorter base 20 of the trapezium section of the bulging 14 has a length of about 5-25% of the diameter of the grommet 16.

The particular specific shape of the bulging improves the performance of the fitting both in coupling the latter with the tube 11 and in squeezing the grommet around the tube by means of tightening the fitting on the tube. This clenching is obtained by using an instrument placed astride the bulging, with jaws suitable for tightening the fitting in at least one part of its tubular body 12 and/or the cylindrical extension 21, where foreseen, thereby creating a grip which is continuous or divided into sectors.

With the insertion of the tube 11 into the fitting 10, the grommet 16 is subjected to a force of attrition which tends to draw it along the tube in the direction of the fitting axis. The grommet is then squeezed into the recess 15, against the side opposite the entrance of the fitting, in the space or cone between that side and the tube. During the tightening phase of the fitting on the tube, this could lead to the grommet being pinched, with consequent damage and unreliability of its sealing qualities. To prevent this mishap, in document EP-0 361 630 the shape of the isosceles triangle has been used for the bulging and, correspondingly, for the recess that houses the grommet.

Meanwhile, in document EP 0 361 630 interest is focussed on the capacity of the space or cone into which the grommet tends to be pushed, and the grommet itself has been designed with an internal diameter equal to or greater than the external diameter of the tube. None of these cases, though, effectively excludes the problem of pinching the grommet.

The bulging of the fitting in this invention, thanks to its characteristics of shape and dimension, safely eliminates the risk of the grommet being pinched.

In fact, the radial wall 18, which is essentially perpendicular to the surface of the tube, constitutes a flat shoulder, without giving any scope to a space or cone with the tube itself. Even if the grommet is pushed against that side 18, it finds no space or cone into which it can insert itself, with the risk of its being pinched at the moment in which the fitting is tightened around the tube. This occurs independently of whether the grommet has an internal diameter greater, equal to or less than the external diameter of the tube. When the internal diameter of the grommet is less than the external diameter of the tube (which happens especially with small-diameter tubes), the force of axial attrition F transmitted to the grommet is discharged perpendicularly to the radial wall 18, bringing about a force of reaction F1 which, together with the force of action F, creates a torque in every section of the grommet. However, given the resistance offered by the radial wall 18, this moment does not cause the grommet to penetrate into the space or cone between wall 18 and tube, where there may be a pinching and damage to the material of the grommet in the next phase of tightening the fitting on the tube.

With the insertion of the tube into the fitting, the grommet is also subjected to cutting forces, caused by the forces of attrition, and which are subsequently amplified in the squeezing phase of the fitting. These may bring about the laceration of the grommet, thereby compromising its sealing properties. This risk is not inevitable in the known versions, where the grommet recess always has a top angle (for example, about 135° in document EP-0361 630 and about 120° in document EP-0 870 964). This risk, however, is eliminated with the fitting in the invention, given the essentially trapezoidal shape of the recess and the fact that the grommet comes to rest radially towards the outside, at the shorter base 20 of the bulging, whose containing surface has practically no angle.

This gives important advantages during the squeezing phase. In fact, the grommet no longer undergoes the stress that it could have suffered during the insertion of the tube into the fitting and can slide more easily into another resting place. If this were not enough, when the fitting is squeezed radially on the tube, the cutting tension disappears, the free sloping side 19 rests against the grommet 16, compressing it and increasing the degree of angle, up to the point where it comes into contact with the external surface of the tube. At this point ― Figs 1b-1d ― as the jaws of the tightening instrument proceed in their action, there is a further increase in angle B and a decrease in angle G. In this way, thanks to the work of the jaws which act upon the top near the shorter base of the trapezium, the final deformed shape comes into being, with angles B and G being practically the same.

The potential torque stresses in the axial section of the grommet that may be generated during the insertion of the tube into the fitting are, therefore, cancelled out by an equal and opposing force which is generated by the rotation of the grommet towards its rest position (see arrows in Figs 1b and 1c). In this way, the grommet is subjected to a compression force only along the opposing sides 18, 19 of the bulging, which is reflected in radial action on the tube wall to give the correct grip of the grommet on the tube itself.

The same thing happens with any of the versions of the fitting described above and shown in the drawings. In particular, in the examples shown in Figs 3 and 3b, when the fitting is tightened, the longer sloping side 19 with a smaller angle B comes to rest, partially on the tube, forming a tightening clamp around the latter, in addition to the usual grip 26. In the version in Fig. 4, the tightening may be carried out from opposite sides of the bulging, on the tubular body 12 and on the extension, as shown.

## Claims

1. Pressure fitting (pressfitting) for a permanent juncture of tubes and similar, consisting of a tubular body (12), extending along an axis (13) and having, near at least one of its ends, a peripheral bulging (14), which defines a recess (15) with an aperture towards the inside of the tubular body and in which there is housed a round grommet (16), designed to form a hermetic seal around the tube with the fitting tightened around the latter, **characterised by** the fact that said peripheral bulging (14), in its initial state before the tightening of the fitting to the tube, seen in cross-section, has the shape of an essentially rectangular trapezium, with a first side (18) that extends radially towards the outside from the tubular body (12), a second free sloping side (19) at the free end of the fitting, facing said first radial side (18) and angled so as to diverge away from said side as it goes towards the axis of said tubular body, a side or shorter external base (20), essentially parallel to the axis of said body and joining together said first and said second side at the top, and a longer absent side which defines the aperture of the recess towards the axis of said body.

2. Fitting according to claim 1, in which said first radial side (18) is opposite to an aperture (22) defined by the second sloping side (19).

3. Fitting according to claims 1 and 2, in which said second sloping side (19) is truncated and pointed towards the fitting axis and, correspondingly , towards the surface of the tube which has been inserted into it.

4. Fitting according to claims 1 and 2, in which said sloping side (19) extends obliquely away from the recess, in the direction of the fitting axis and, correspondingly, of the surface of the tube inserted into it.

5. Fitting according to claims 1 and 2, in which said second sloping side (19) has an end portion sloping upward (19') towards the outside or, practically, parallel to the fitting axis.

6. Fitting according to claims 1 and 2, in which said second sloping side (19) has a cylindrical portion (21) which extends along the other part of the tubular body.

7. Fitting according to any of the previous claims, in which said first radial side (18) has an angle of 80-90°, preferably of 90°, with respect to the fitting axis.

8. Fitting according to claims 1-3, in which said second sloping side (19) forms an angle of 50-75°, preferably of 55°, with respect to the fitting axis.

9. Fitting according to claims 1-3, in which the first radial side and the second radial side (18, 19) have the same angle to the fitting axis.

10. Fitting according to claims 1, 2 and 4-6, in which said second sloping side (19) has an angle of 25-35°, preferably 30°, compared to the fitting axis.

11. Fitting according to any of the previous claims, in which said side or shorter base (20) has a length equal to about 5-25% of the diameter of the grommet (16).

12. Fitting according to any one of the previous claims, in which said grommet (16) has an internal diameter equal to, greater or less than the external diameter of the tube to be coupled with the fitting.
